# EUROPEAN PATENT APPLICATION

(11) **EP 4 344 235 A1**
(43) Date of publication of application: **27.03.2024**
(21) Application number: 22860267.8
(22) Date of filing: 11.08.2022
(51) Int. Cl.: H04N 21/482

(54) **VIDEO INTERACTION METHOD AND APPARATUS, AND DEVICE AND MEDIUM**

(30) Priority: 27.08.2021 CN 202110998206
(71) Applicant: Beijing Zitiao Network Technology Co., Ltd., Beijing 100190 (CN)
(72) Inventor: GUAN, Sainan, Beijing 100086 (CN); GAO, Ding, Beijing 100086 (CN); HONG, Qiongxing, Beijing 100086 (CN); ZHENG, Yixin, Beijing 100086 (CN)
(74) Representative: Dentons UK and Middle East LLP
(86) International application number: PCT/CN2022/111742
(87) International publication number: WO 2023/024921

(57) **Abstract**

The present disclosure relates to a video interaction method and apparatus, and a device and a medium. The video interaction method comprises: presenting a video list in a video presentation page; when a first operation on the video list is detected, playing, on the video presentation page and by means of a floating window, a video corresponding to the first operation; and when a second operation on the floating window is detected, jumping, from the video presentation page, to display a target video detail page, wherein the target video detail page is a video detail page corresponding to the target video, which is played in the floating window. According to the embodiments of the present disclosure, the efficiency of a user searching for a video of interest can be improved.

## Description

### CROSS-REFERENCE TO RELATED APPLICATIONS

The present application claims priority to China Patent Application No. 202110998206.8 filed on August 27, 2021, the invention title of which is "VIDEO INTERACTION METHOD AND APPARATUS, AND DEVICE AND MEDIUM", the disclosure of which is incorporated by reference herein in its entirety.

### TECHNICAL FIELD

The present disclosure relates to the technical field of Internet, in particular to a video interaction method and apparatus, a device and a medium.

### BACKGROUND

At present, when the user opens a video list on the electronic device, it is possible to click on any video in the video list so as to view the same as needed. However, all of the videos in the video list cannot necessarily meet the requirements of the user, and in this case, the user will click on each video to enter a video details page of the video so as to view the same; when the user is not interested in the video, the user has to return to the video list and click on another video to enter a video details page of the video so as to view the same, which leads to a low efficiency of searching for a video of interest by the user.

### SUMMARY

In order to solve the above-described technical problem or at least partially solve the above-described technical problem, the present disclosure provides a video interaction method and apparatus, a device and a medium.

In a first aspect of the present disclosure, a video interaction method is provided, comprising:
displaying a video list in a video demonstration page;
playing a video corresponding to the first operation in the video demonstration page through a floating window when a first operation on a video list is detected; and
jumping from the video demonstration page to display a target video details page when a second operation on the floating window is detected, wherein the target video details page is a video details page corresponding to a target video played by the floating window.

In a second aspect of the present disclosure, a video interactive device is provided, comprising:
a first display unit configured to demonstrate a video list in a video demonstration page;
a first play unit configured to play a video corresponding to the first operation in the video demonstration page through a floating window when a first operation on the video list is detected; and
a second display unit configured to jump from the video demonstration page to display a target video details page when a second operation on the floating window is detected, wherein the target video details page is a video details page corresponding to a target video played by the floating window.

In a third aspect of the present disclosure, an electronic device is provided, comprising:
a processor; and
a memory for storing executable instructions;
wherein the processor is configured to read the executable instructions from the memory and execute the executable instructions to implement the video interaction method according to the first aspect.

In a fourth aspect of the present disclosure, a computer-readable storage medium is provided, which has a computer program stored thereon that, when executed by a processor, causes the processor to implement the video interaction method according to the first aspect.

Compared with the prior art, the technical solution provided by the embodiment of the present disclosure has the following advantages:

In the video interaction method and apparatus, device and medium of the embodiment of the present disclosure, during the process of demonstrating the video list on the video demonstration page, a video corresponding to a first operation may be played through a floating window in the video demonstration page after a first operation on a video list is detected, and the video demonstration page jumps to a target video details page corresponding to a target video played by the floating window after a second operation on the floating window is detected; in this way, the user may preview a video through the floating window, and directly enter a video details page of the video through the floating window without searching for a video of interest in the video list when it is determined that the previewed video is of interest, thereby improving the efficiency of searching for a video of interest by the user.

### BRIEF DESCRIPTION OF THE ACCOMPANYING DRAWINGS

The above-described and other features, advantages and aspects of various embodiments of the present disclosure will become more apparent in conjunction with the accompanying drawings and with reference to the following detailed description. Throughout the accompanying drawings, the same or similar reference numerals indicate the same or similar elements. It should be understood that, the accompanying drawings are schematic, and the originals and elements are not necessarily drawn to scale.
Fig. 1 is a flowchart of a video interaction method provided by an embodiment of the present disclosure;
Fig. 2 is a schematic view of a video demonstration page provided by an embodiment of the present disclosure;
Fig. 3 is a schematic view of another video demonstration page provided by an embodiment of the present disclosure;
Fig. 4 is a schematic view of a further video demonstration page provided by an embodiment of the present disclosure;
Fig. 5 is a schematic view of still another video demonstration page provided by an embodiment of the present disclosure;
Fig. 6 is a schematic view of a video details page provided by an embodiment of the present disclosure;
Fig. 7 is a schematic view of another video details page provided by an embodiment of the present disclosure;
Fig. 8 is a schematic view of still another video demonstration page provided by an embodiment of the present disclosure;
Fig. 9 is a schematic view of still another video demonstration page provided by an embodiment of the present disclosure;
Fig. 10 is a schematic view of a target display area provided by an embodiment of the present disclosure;
Fig. 11 is a schematic view of still another video demonstration page provided by an embodiment of the present disclosure;
Fig. 12 is a flowchart of another video interaction method provided by an embodiment of the present disclosure;
Fig. 13 is a schematic view of still another video demonstration page provided by an embodiment of the present disclosure;
Fig. 14 is a schematic view of still another video demonstration page provided by an embodiment of the present disclosure;
Fig. 15 is a schematic structural view of a video interactive device provided by an embodiment of the present disclosure;
Fig. 16 is a schematic structural view of an electronic device provided by an embodiment of the present disclosure.

### DETAILED DESCRIPTION

The embodiments of the present disclosure will be described in more detail below with reference to the accompanying drawings. Although some embodiments of the present disclosure are shown in the accompanying drawings, it should be understood that, the present disclosure may be embodied in various forms, and should not be construed as limited to the embodiments set forth here, rather, these embodiments are provided for a more thorough and complete understanding of the present disclosure. It should be understood that, the accompanying drawings and embodiments of the present disclosure are only for illustrative purposes, rather than limiting the protection scope of the present disclosure.

It should be understood that, various steps recited in the method embodiments of the present disclosure may be performed according to different sequences and/or in parallel. Further, the method embodiments may comprise additional steps and/or omit performing the illustrated steps. The scope of the present disclosure is not limited in this respect.

As used herein, the term "comprising" and its variants are open-ended comprising, that is, "comprising but not limited to". The term "based on" is "at least partially based on". The term "one embodiment" means "at least one embodiment"; the term "another embodiment" means "at least one other embodiment"; and the term "some embodiments" means "at least some embodiments". Related definitions of other terms will be given in the following description.

It is to be noted that, the concepts such as "first" and "second" mentioned in this disclosure are only used to distinguish different devices, modules or units, rather than defining the sequence or interdependence of the functions performed by these devices, modules or units.

It is to be noted that, the modifications of "a" and "a plurality" mentioned in this disclosure are schematic and non-restrictive, and those skilled in the art should understand that they should be understood as "one or more" unless specifically indicated in the context otherwise.

The names of messages or information exchanged among a plurality of devices in the embodiment of the present disclosure are only for illustrative purposes, rather than limiting the scope of these messages or information.

The embodiment of the present disclosure provides a video interaction method and apparatus, device and medium that can help the user quickly search out a video of interest.

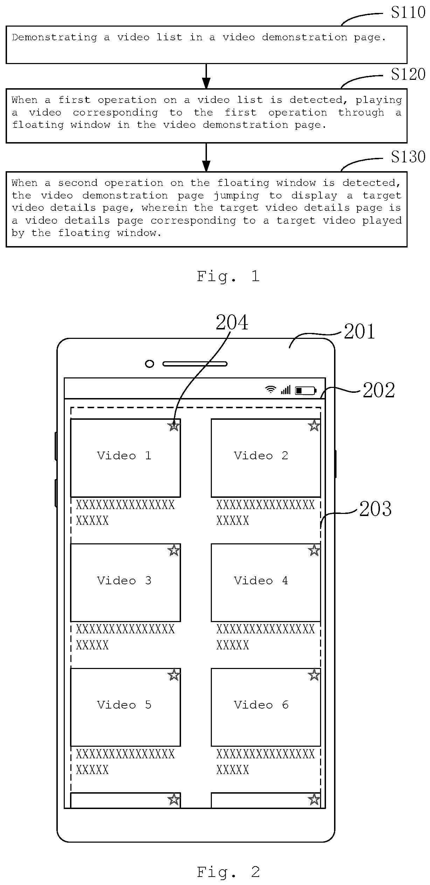

First of all, the video interaction method provided by the embodiment of the present disclosure will be described below in conjunction with Figs. 1-15.

Fig. 1 shows a flowchart of a video interaction method provided by an embodiment of the present disclosure.

In the embodiment of the present disclosure, the video interaction method may be performed by an electronic device. Wherein, the electronic device may comprise, but is not limited to, a mobile terminal such as a mobile phone, a notebook computer, a digital broadcast receiver, PDA (Personal Digital Assistant), PAD (Tablet Computer), PMP (Portable Multimedia Player), a vehicle-mounted terminal (for example, a vehicle-mounted navigation terminal) and a wearable device, and a fixed terminal such as digital TV, the desktop computer, and a smart home device.

As shown in Fig. 1, the video interaction method may comprise the following steps.

S110, demonstrating a video list in a video demonstration page.

In the embodiment of the present disclosure, when the user intends to search for a video, a video demonstration page may be opened on the electronic device, so that the electronic device may demonstrate a video list in the video demonstration page.

Alternatively, the video demonstration page may be any page for demonstrating a video list. For example, the video demonstration page may be a functional page of a video platform such as a video recommendation page, a video channel page, a video hotspot page and a video search result page. For another example, the video demonstration page may also be a user page of a video platform such as a user works page.

Wherein, the video platform may comprise a video website and a video application, and is not limited thereto here.

Fig. 2 shows a schematic view of a video demonstration page provided by an embodiment of the present disclosure.

As shown in Fig. 2, a video recommendation page 202 may be displayed on a mobile phone 201, a video list 203 may be displayed in the video recommendation page, and the video list 203 may comprise videos such as a video 1 and a video 2. The user may slide the video recommendation page 202 by touch control so as to view other videos that are not displayed.

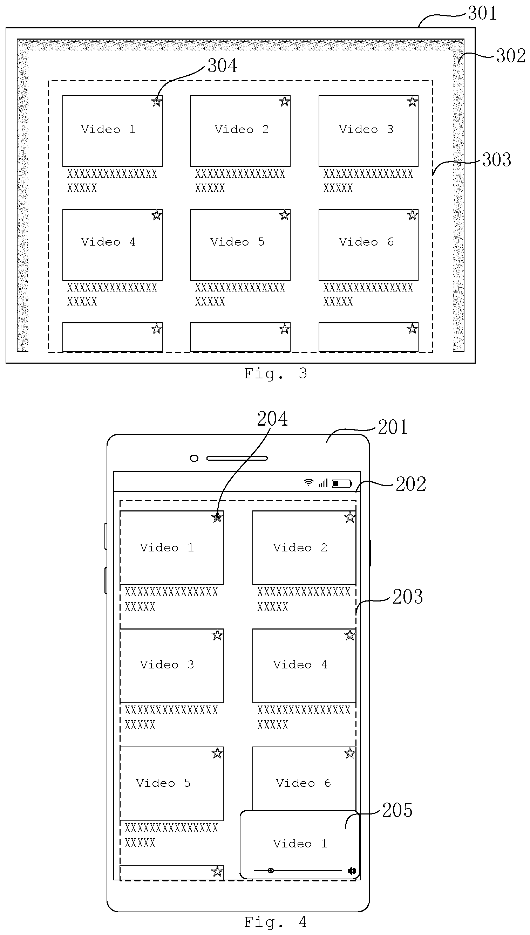

Fig. 3 shows a schematic view of another video demonstration page provided by an embodiment of the present disclosure.

As shown in Fig. 3, a video recommendation page 302 may be displayed on the desktop computer 301, a video list 303 may be displayed in the video recommendation page, and the video list 303 may comprise videos such as a video 1 and a video 2. The user may slide the video recommendation page 303 by operating a mouse so as to view other videos that are not displayed.

S120, when a first operation on a video list is detected, playing a video corresponding to the first operation through a floating window in the video demonstration page.

In the embodiment of the present disclosure, when the user intends to preview a certain video in the video list, a first operation on the video list may be input to the electronic device, so that the electronic device may play a video corresponding to the first operation through a floating window in the video demonstration page in response to the first operation, that is, playing a video that the user intends to preview through a floating window.

Alternatively, the first operation may be an operation for any video in the video list, and the video for which the first operation acts is a video corresponding to the first operation.

In some embodiments, the first operation may comprise an operation to trigger playing the video through a floating window by touch control or operating a mouse to perform an operation such as double click and long press on any video, a voice control operation or an expression control operation, etc., and is not limited thereto here.

In other embodiments, a preview trigger control may be displayed on each video in the video list, and the preview trigger control may be any icon, button, and the like to trigger playing a video to which the preview trigger control belongs through a floating window, and is not limited thereto here.

Wherein, the first operation may comprise a trigger operation for any preview trigger control. Specifically, the first operation may comprise an operation to trigger playing a video to which the preview trigger control through a floating window by touch control or operating a mouse to perform an operation such as click and long press on a preview trigger control, a voice control operation or an expression control operation, etc., and is not limited thereto here.

Continuing to refer to Fig. 2, a non-triggered (not filled with a color) "DING" icon 204 may be displayed in each video in the video list 203, and the user may click on the "DING" icon 204 on the video 1 by touch control, so that the mobile phone 201 may play the video 1 through a floating window in the video recommendation page 202, as shown in Fig. 4. Fig. 4 shows a schematic view of a further video demonstration page provided by an embodiment of the present disclosure.

As shown in Fig. 4, after the user clicks on the "DING" icon 204 on the video 1, the mobile phone 201 displays a floating window 205 in the lower right corner of the video recommendation page 202, and the video 1 is played in the floating window 205. At this time, the "DING" icon 204 on the video 1 changes from a non-triggered state to a triggered state (filled with a color).

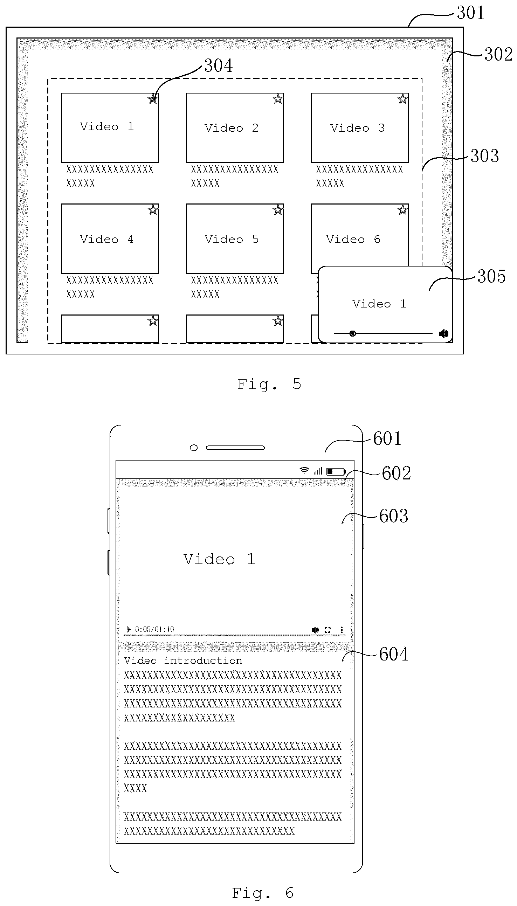

Continuing to refer to Fig. 3, a non-triggered (not filled with a color) "DING" icon 304 may be displayed in each video in the video list 303, and the user may click on the "DING" icon 304 on the video 1 by operating a mouse, so that the desktop computer 301 may play the video 1 through a floating window in the video recommendation page 302, as shown in Fig. 5.

Fig. 5 shows a schematic view of still another video demonstration page provided by an embodiment of the present disclosure.

As shown in Fig. 5, after the user clicks on the "DING" icon 304 on the video 1, the desktop computer 301 displays a floating window 305 in the lower right corner of the video recommendation page 302, and the video 1 is played in the floating window 305. At this time, the "DING" icon 304 on the video 1 changes from a non-triggered state to a triggered state (filled with a color).

Therefore, in the embodiment of the present disclosure, when the user is interested in the video cover content or video title content of a certain video in the video list, but unwilling to interrupt a behavior of browsing the video cover content or video title content of other videos, the user may input the first operation on the video list to the electronic device, so as to play a video to which the video cover content or video title content of interest ny the user is belongs through a floating window, thereby realizing the content consumption experience of full consumption and light consumption, and achieving the effect of viewing while selecting.

Further, in the embodiment of the present disclosure, the electronic device may display a floating window in the video demonstration page by using the mini player technology, so as to play a video corresponding to the first operation through a floating window.

S130, when a second operation on the floating window is detected, the video demonstration page jumping to display a target video details page, wherein the target video details page is a video details page corresponding to a target video played by the floating window.

In the embodiment of the present disclosure, after the electronic device plays a video corresponding to the first operation through a floating window in the video demonstration page, the user may continue to slide the video demonstration page to view other videos or perform other page operations on the video demonstration page. When the user slides the video demonstration page or performs other page operations on the video demonstration page, the floating window is always displayed in a fixed position and plays a video continuously. When the user decides to view the target video played by the floating window, the second operation on the floating window may be input to the electronic device, so that the electronic device may jump from the video demonstration page to display a target video details page corresponding to a target video played by the floating window in response to the second operation.

In some embodiments, the second operation may comprise an operation to trigger jumping to display a target video details page by touch control or operating a mouse to perform an operation such as click, double click and long press on the floating window, a voice control operation or an expression control operation, etc., and is not limited thereto here.

In other embodiments, a large-screen viewing control may be displayed on the floating window, and the large-screen viewing control may be any icon, button and the like to trigger jumping to display a target video details page, and is not limited thereto here.

Wherein, the second operation may comprise a trigger operation on the large-screen viewing control. Specifically, the second operation may comprise an operation to trigger jumping to display a target video details page by touch control or operating a mouse to perform an operation such as click and long press on the large-screen viewing control, a voice control operation or an expression control operation, etc., and is not limited thereto here.

In the embodiment of the present disclosure, the target video may be a video played in real time by the floating window.

Alternatively, the video details page may comprise a video play window and the video introduction information. The video play window may be configured to play a target video, and the video introduction information may be configured to demonstrate the text introduction content of the target video.

Continuing to refer to Fig. 4, after the user performs a long press on the floating window 205 by touch control, the mobile phone 201 may jump from the video recommendation page 202 to the video details page, as shown in Fig. 6.

Fig. 6 shows a schematic view of a video details page provided by an embodiment of the present disclosure.

As shown in Fig. 6, a video details page 602 may be displayed on a mobile phone 601, and a video play window 603 and the video introduction information 604 of the video 1 are displayed in the video details page 602.

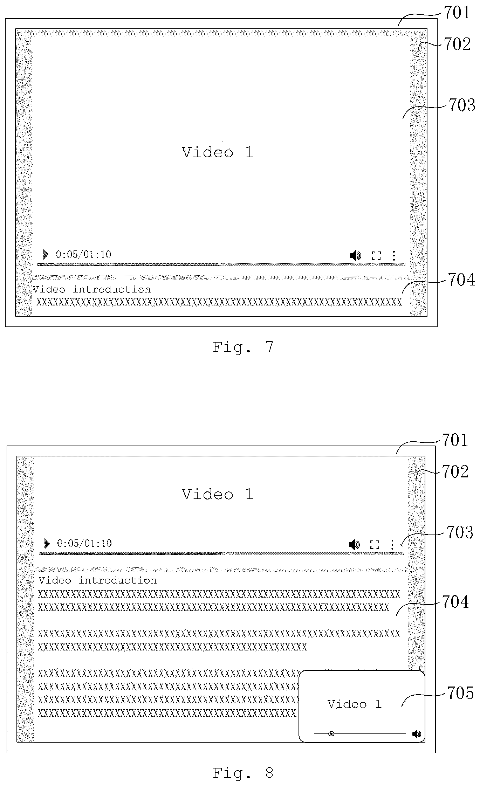

Continuing to refer to Fig. 5, after the user performs a long press on the floating window 305 by operating a mouse, the desktop computer 301 may jump from the video recommendation page 302 to the video details page, as shown in Fig. 7.

Fig. 7 shows a schematic view of another video details page provided by an embodiment of the present disclosure.

As shown in Fig. 7, the desktop computer 701 may display a video details page 702, and a video play window 703 and the video introduction information 704 of the video 1 are displayed in the video details page 702.

In some embodiment of the present disclosure, after jumping from the video demonstration page to display a target video details page, the video interaction method may further comprise: playing the target video through the video play window.

Specifically, after jumping from the video demonstration page to display a target video details page, the electronic device may automatically replay the target video or continue to play the target video according to a play progress in the floating window before jumping to display a target video details page.

In some embodiment of the present disclosure, after jumping from the video demonstration page to display a target video details page, the video interaction method may further comprise: playing the target video through the video play window when a click operation on a play control in the video play window is detected.

Specifically, after the electronic device jumps from the video demonstration page to display a target video details page, the electronic device may pause the target video, and when the user intends to play the target video, a click operation on the play control in the video play window may be input to the electronic device, so that the electronic device may replay the target video or continue to play the target video according to a play progress in the floating window before jumping to display a target video details page in response to the click operation.

In the embodiment of the present disclosure, alternatively, after jumping from the video demonstration page to display a target video details page, the video interaction method may further comprise: pausing the target video played through the video play window in the case where at least part of the video play window moves out of a page display area of the target video details page; and continuing the target video played through a floating window in the target video details page.

In the embodiment of the present disclosure, during the process of playing the target video by the electronic device through the video play window, the user may continue to slide the target video details page to view other contents in the page or perform other page operations on the target video details page. When the user slides the target video details page or performs other page operations on the target video details page, if the video play window is still completely displayed in the page display area of the target video details page, the target video remains played through the video play window; if at least part of the video play window moves out of a page display area of the target video details page, the target video played through the video play window is paused, and the target video is continued through a floating window in the target video details page according to a play progress when the target video played through the video play window is paused.

Further, in the embodiment of the present disclosure, the electronic device may display a floating window in the target video details page by using the mini player technology, so as to play the target video through a floating window.

Continuing to refer to Fig. 7, during the process that the desktop computer 701 displays the video details page 702, if the user intends to view the video introduction information 704 that is not displayed, at least part of the video play window 703 may be moved out of a page display area of the video details page 702 by sliding the video details page 702 downward by operating a mouse; at this time, the desktop computer 701 may continue to play the video 1 through a floating window in the video details page 702.

Fig. 8 shows a schematic view of still another video demonstration page provided by an embodiment of the present disclosure.

As shown in Fig. 8, the desktop computer 701 may display a floating window 705 in the lower right corner of the video details page 702 and continue to play the video 1 in the floating window 705 in the case where at least part of the video play window 703 moves out of a page display area of the video details page 702, so that the user may perform a page operation on the video details page 702 without pausing the video 1, thereby improving continuous viewing of the video 1 by the user and further enhancing the user's experience.

In some embodiments, the user may perform long press or double click on the floating window to return to a full display of the video play window. In other embodiments, a large-screen viewing control may also be displayed on the floating window, and the user may click on the large-screen viewing control to return to a full display of the video play window. Therefore, the user may quickly return to the video play window to view the target video through a floating window displayed in the target video details page, thereby further simplifying the user's operation and improving the user's convenience.

In the embodiment of the present disclosure, during the process of demonstrating the video list on the video demonstration page, after a first operation on a video list is detected, a video corresponding to the first operation may be played in the video demonstration page through a floating window; and after a second operation on the floating window is detected, the video demonstration page may jump to a target video details page corresponding to a target video played in the floating window, so that the user may preview a video through the floating window, and directly enter a video details page of the video through the floating window without searching for a video of interest in the video list when it is determined that the previewed video is of interest, thereby improving the efficiency of searching for a video of interest by the user.

In other embodiments of the present disclosure, after S120 and before S130, the video interaction method may further comprise: playing the video corresponding to the second operation through the floating window when a second operation on the video list is detected.

In the embodiment of the present disclosure, when the user finds a new video of interest during the process of viewing other videos, a second operation on the video list may be input to the electronic device, so that the electronic device may play the video corresponding to the second operation through the floating window in the video demonstration page in response to the second operation, that is, replacing the video played in real time in the floating window with the new video of interest.

Alternatively, the second operation may be an operation for other videos than a video played in real time in any floating window in the video list, and the video for the second operation is a video corresponding to the second operation.

In some embodiments, the second operation may comprise an operation to trigger playing the video through a floating window by touch control or operating a mouse to perform an operation such as double click and long press on any of the above-described other videos, a voice control operation or an expression control operation, etc., and is not limited thereto here.

In other embodiments, a preview trigger control may be displayed on each video in the video list, and the preview trigger control may be any icon, button and the like to trigger playing a video to which the preview trigger control belongs through a floating window, and is not limited thereto here.

Wherein, the second operation may comprise a trigger operation on the preview trigger control displayed on other videos than a video played in real time in any floating window. Specifically, the second operation may comprise an operation to trigger playing a video to which the preview trigger control belongs through a floating window by touch control or operating a mouse to perform an operation such as click and long press on the preview trigger control, a voice control operation or an expression control operation, etc., and is not limited thereto here.

Therefore, in the embodiment of the present disclosure, the user may arbitrarily switch a video played in real time in the floating window based on own needs, thereby further improving the user's experience.

In still other embodiments of the present disclosure, after S120 and before S130, the video interaction method may further comprise: after the target video ends, a video next to the target video is played as a new target video according to a list sequence of the video list.

In the embodiment of the present disclosure, during the process that the user slides the video demonstration page or performs other page operations on the video demonstration page, if the target video played by the floating window ends, the electronic device may select a video next to the target video in the video list according to a list sequence of the video list, and make a selected video as a new target video which is played through a floating window.

Taking the target video as a video corresponding to the first operation as an example, after a video corresponding to the first operation ends, the electronic device may select a video next to a video corresponding to the first operation according to a list sequence of the video list, and automatically play a video next to a video corresponding to the first operation through a floating window.

Alternatively, within a preset duration, for example 3s, before the target video ends, a prompt message, for example, "Play the next video after 3s" may be demonstrated in the lower right corner of the floating window to prompt the user.

Therefore, in the embodiment of the present disclosure, the electronic device may continuously play a video through a floating window, and further demonstrate more video content to the user, so that the user may more easily discover a video of interest, thereby further improving the user's experience.

In still other embodiments of the present disclosure, the video list may comprise a plurality of preview windows, each of which may belong to a video.

Wherein, in an initial state, each preview window may display the video cover content of a video to which it belongs.

Further, the video interaction method may further comprise: playing a video to which the second preview window belongs in the second preview window when a fifth operation on the second preview window among the plurality of preview windows is detected.

In the embodiment of the present disclosure, when the user intends to preview a certain video in the video list, a fifth operation on the second preview window may also input to the electronic device, so that the electronic device may play a video to which the second preview window belongs in the second preview window in response to the fifth operation.

Wherein, the second preview window may be any preview window.

In some embodiments, in the case where the electronic device may be controlled by touch control, the fifth operation may comprise an operation to trigger selecting the second preview window by a gesture control operation such as click, a voice control operation or an expression control operation, etc. on the second preview window, and is not limited thereto here.

In other embodiments, in the case that the electronic device may be controlled by operating a mouse, the fifth operation may comprise a mouse operation such as holding or clicking on the second preview window, and is not limited thereto here.

In the embodiment of the present disclosure, further, the electronic device may play a preset duration, for example 5s, of a video to which the second preview window belongs within the second preview window, for the user to preliminarily screen the video.

In still other embodiments of the present disclosure, the video interaction method may further comprise: performing a play control operation corresponding to the sixth operation on the target video when a sixth operation on the floating window is detected.

In the embodiment of the present disclosure, the floating window may support a basic play control operation on the video.

In some embodiments, the play control operation may comprise a video switching operation, such as a forward switching operation and a backward switching operation. When the user intends to switch the target video displayed in the floating window to other videos, the user may click on the forward switch button to realize a forward switching operation, or click on the backward switch button to realize a backward switching operation.

According to a list sequence of the video list, the electronic device may switch a video displayed in the floating window to a next video along a switching direction corresponding to a switching operation.

Alternatively, the video switching operation may support switching to a preset number of videos, for example three, next to the target video according to the switching direction.

In other embodiments, the play control operation may comprise a progress control operation, and the electronic device may adjust a play progress of the video in the floating window according to a progress control operation.

In yet other embodiments, the play control operation may comprise a standby operation, so that the electronic device may pause the video in the floating window.

In still other embodiments, the play control operation may comprise a play operation, so that the electronic device may continue to play a paused video in the floating window.

In still other embodiments, the play control operation may comprise a sound adjusting operation, so that the electronic device may adjust a sound volume of the video according to the sound adjusting operation.

In another embodiment of the present disclosure, the display size and display position of the floating window may be adjusted as needed.

In some embodiments of the present disclosure, the video interaction method may further comprise: obtaining a screen size of the target video; displaying a floating window according to a first window size in the case where the screen size belongs to a first size type; and displaying a floating window according to a second window size in the case where the screen size belongs to a second size type.

In the embodiment of the present disclosure, before the electronic device displays the target video through a floating window, the screen size of the target video may first be determined so as to judge whether the screen size belongs to the first size type or the second size type. If the screen size belongs to the first size type, the floating window may be displayed according to a first window size; and if the screen size belongs to the second size type, the floating window may be displayed according to a second window size.

Alternatively, the first size type may be a landscape size type, and the second size type may be a portrait size type.

Further, the electronic device may judge a size type to which it belongs by a width to height ratio of a screen size; if the ratio is greater than 1, it may be determined that the screen size belongs to a landscape size type; and if the ratio is less than 1, it may be determined that the screen size belongs to a portrait size type.

Further, the size of the first window is different from that of the second window, so that the electronic device may self-adaptively adjust a display size of the floating window according to different screen sizes of different videos, so as to improve the viewing experience of the user.

In the embodiment of the present disclosure, alternatively, since the height value of the first window size and the height value of the second window size may be different, and the width value of the first window size and the width value of the second window size may be the same, it is possible to reduce the occupation of a page by the floating window as much as possible, and provide more page browsing space for the user.

For example, the display size of the floating window corresponding to a landscape recording mode may be 350 pixels*197 pixels, and the display size of the floating window corresponding to a portrait recording mode may be 350 pixels*262 pixels; taking the target video as a video corresponding to the first operation as an example, before playing a video corresponding to the first operation through a floating window, the electronic device may first judge a recording mode of a video corresponding to the first operation; if the recording mode is a portrait recording mode, it is possible to display a floating window of 350 pixels*262 pixels, and centrally display a video screen of a video corresponding to the first operation in the floating window, so as to play a video corresponding to the first operation. After the electronic device finishes playing a video corresponding to the first operation, the electronic device may obtain a video recording mode of a video next to a video corresponding to the first operation; if the recording mode is a landscape recording mode, it is possible to adjust the display size of the floating window to 350 pixels*197 pixels, and centrally display a video screen of a video next to a video corresponding to the first operation in the floating window, so as to play a video next to a video corresponding to the first operation.

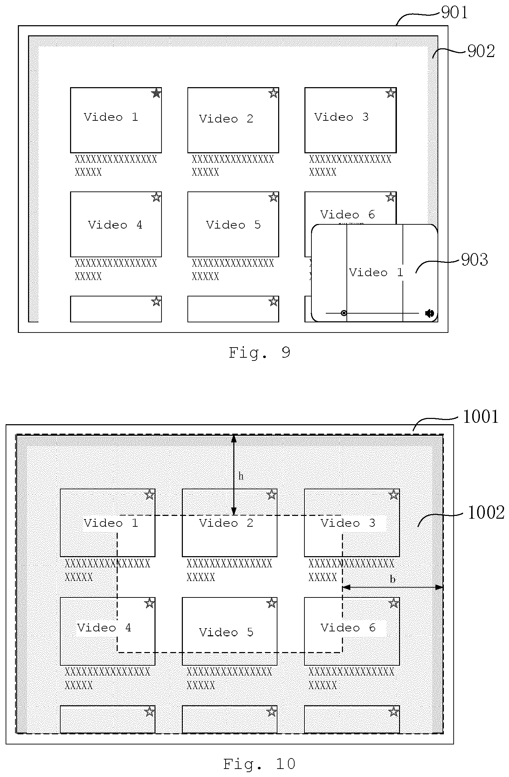

Fig. 9 shows a schematic view of still another video demonstration page provided by an embodiment of the present disclosure.

As shown in Fig. 9, after the user clicks on the "DING" icon on the video 1, the desktop computer 901 displays a floating window 903 in the lower right corner of the video recommendation page 902, and the video 1 recorded in a portrait recording mode may be centrally played in the floating window 903.

In the embodiment of the present disclosure, alternatively, the user may also perform a scaling operation on the floating window, and the electronic device may perform a proportional scaling operation on the floating window according to the display size of the floating window based on the scaling operation. Moreover, when the user restarts the floating window next time, the floating window is displayed in a scaled size corresponding to the display size.

Therefore, in the embodiment of the present disclosure, the user may manually adjust a display size of the floating window to meet individual needs of the user, thereby further enhancing the user's experience.

In other embodiments of the present disclosure, the video interaction method may further comprise: adjusting a display position of the floating window according to a real-time position of the seventh operation when a seventh operation on the floating window is detected.

In the embodiment of the present disclosure, when the user intends to adjust a display position of the floating window, a seventh operation on the floating window may be input to the electronic device, so that the electronic device may display a display position of the floating window at a real-time position of the seventh operation.

Alternatively, the seventh operation may comprise a dragging operation of the floating window by touch control or operating a mouse. The real-time position of the seventh operation may be a real-time dragging position of the dragging operation.

Further, the video interaction method may further comprise: determining an ending position of the seventh operation when the seventh operation ends; displaying a floating window at the ending position in the case where the ending position is located within the target display area; and bounce the floating window from the ending position to the target position corresponding to the ending position for display in the case where the ending position is located outside the target display area, wherein the target position is located within the target display area.

In the embodiment of the present disclosure, when the electronic device determines that the seventh operation of the user ends, the electronic device may determine an ending position of the seventh operation and judge whether the ending position is completely located within the target display area; if the ending position is completely located within the target display area, a floating window may be displayed at the ending position; otherwise, the electronic device may determine a target position corresponding to the ending position within the target display area, and bounce the floating window from the ending position to the target position for display.

Alternatively, the ending position of the seventh operation may be a drag terminal position of the dragging operation.

Alternatively, the target display area may be a display area that can display a floating window in a preset video demonstration page.

Fig. 10 shows a schematic view of a target display area provided by an embodiment of the present disclosure.

As shown in Fig. 10, the desktop computer 1001 may display a video recommendation page, and the page area 1002 bordered by a dotted box on the video recommendation page is a display area that can display a floating window.

Alternatively, the area width of the target display area 1 (b as shown in Fig. 10) is the same as the real-time width of the floating window, and the area height of the target display area (h as shown in Fig. 10) is the same as the real-time height of the floating window.

Further, the specific method for the electronic device to determine a target position corresponding to the ending position in the target display area may be as follows: the electronic device may determine a side closest to the ending position, and determine a projection position of the ending position on this side, with the projection position as a target position. If there are two sides closest to the ending position, the side with higher priority is selected from the two sides according to a preset priory of each side, and the projection position of the ending position on this side is determined, with the projection position as a target position.

Alternatively, when the user starts the floating window for the first time, the floating window may be displayed in the lower right corner of the page; if the user adjusts a display position of the floating window, when the user restarts the floating window next time, the floating window may be displayed at an adjusted position of the user.

Therefore, in the embodiment of the present disclosure, the user may manually adjust a display position of the floating window, so as to meet individual needs of the user, thereby further improving the user's experience.

In a further embodiment of the present disclosure, the electronic device may also prompt a video played through a floating window.

In the embodiment of the present disclosure, the video list may comprise a plurality of preview windows, each of which may belong to a video.

Further, the video interaction method may also comprise: determining a first preview window corresponding to the target video among a plurality of preview windows; and displaying a play prompt identifier on the first preview window.

In the embodiment of the present disclosure, the electronic device may start the first preview window corresponding to the target video before playing the target video, and displaying a play prompt identifier on the first preview window during the process of playing the target video, wherein the play prompt identifier is used to prompt the user that the video to which the first preview window belongs is a video currently being played through the floating window, so that the user may quickly search out the video cover content or video title content of the video that is currently being played through the floating window.

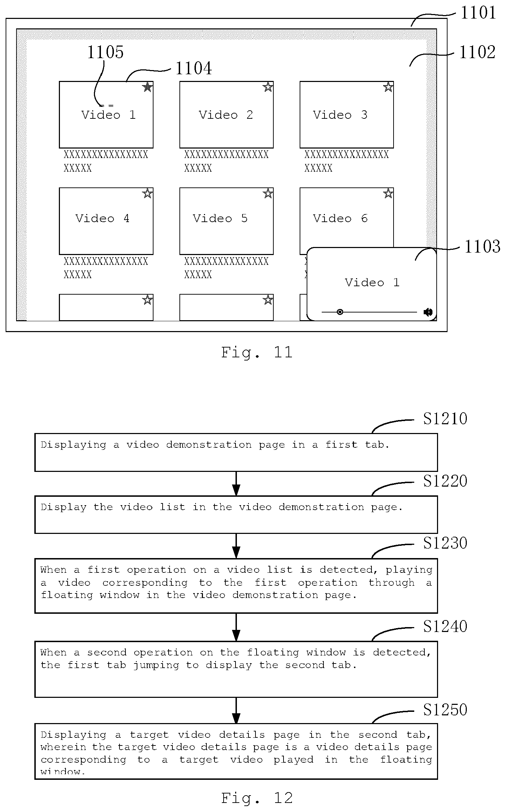

Fig. 11 shows a schematic view of still another video demonstration page provided by an embodiment of the present disclosure.

As shown in Fig. 11, after the user clicks on the "DING" icon on the video 1, the desktop computer 1101 displays a floating window 1103 in the lower right corner of the video recommendation page 1102, and may play the video 1 in the floating window 1103. At the same time, the preview window 1104 of the video 1 may display a play prompt identifier 1105 to prompt the user that the video 1 is currently being played through the floating window 1103.

Alternatively, after the play prompt identifier is displayed on the first preview window, the video interaction method may further comprise: displaying a target control when a third operation on the play prompt identifier is detected; and stopping displaying the floating window and the play prompt identifier when a fourth operation on the target control is detected.

In the embodiment of the present disclosure, when the user intends to stop playing a video through a floating window, a third operation on the play prompt identifier may be input to the electronic device, so that the electronic device displays a target control in response to the third operation. The user may continue to input a fourth operation on the target control to the electronic device, so that the electronic device stops displaying the floating window to stop playing a video through a floating window and stops displaying the playing prompt identifier on the first preview window in response to the fourth operation.

Alternatively, the third operation may comprise an operation to trigger displaying the target control by touch control or operating a mouse to perform an operation such as click, double click and long press on the play prompt identifier, a voice control operation or an expression control operation, etc., and is not limited thereto here.

Alternatively, the target control may be any icon, button and the like to trigger stopping displaying the floating window, and is not limited thereto here.

Alternatively, the fourth operation may comprise an operation to trigger stopping displaying the floating window by touch control or operating a mouse to perform an operation such as click, double click and long press on the target control, a voice control operation or an expression control operation, etc., and is not limited thereto here.

Therefore, the user may accomplish an operation of closing the floating window in the video list, thereby improving the operation convenience of the user.

In still another embodiment of the present disclosure, in order to facilitate the user to quickly return from the target video details page to the video demonstration page, the embodiment of the present disclosure also provides another video interaction method.

Fig. 12 shows a flowchart of another video interaction method provided by an embodiment of the present disclosure.

As shown in Fig. 12, the video interaction method may comprise the following steps.

S1210, displaying a video demonstration page in a first tab.

In the embodiment of the present disclosure, when the user intends to search for a video, the user may open the first tab on the electronic device, and may open the video demonstration page in the first tab for the user to search for a video.

Wherein the first tab may be any tab.

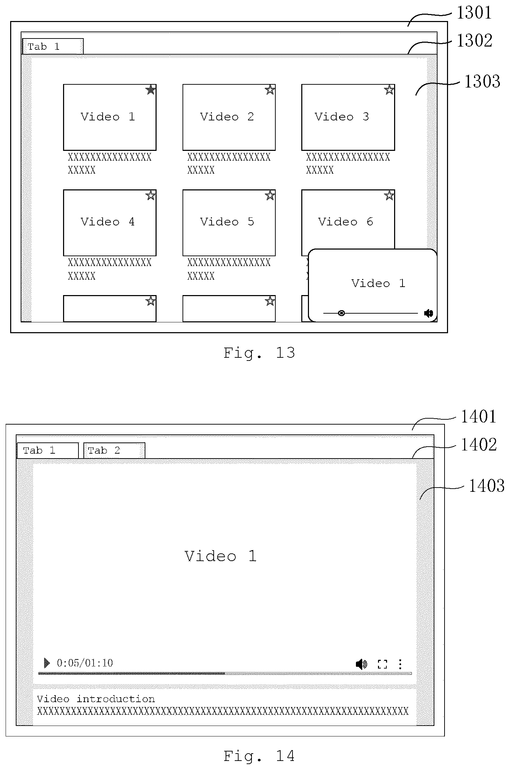

Fig. 13 shows a schematic view of still another video demonstration page provided by an embodiment of the present disclosure.

As shown in Fig. 13, a tab page 1302 of the tab 1 may be displayed on the desktop computer 1301, and a video recommendation page 1303 may be displayed in the tab page 1302.

S1220, displaying the video list in the video demonstration page.

Wherein, S1220 is similar to S110 in the embodiment shown in Fig. 1, which will not be described in detail here.

Continuing to refer to Fig. 13, a video list may be displayed in the video recommendation page 1303, and the video list may comprise videos such as a video 1 and a video 2.

S1230, when a first operation on a video list is detected, playing a video corresponding to the first operation through a floating window in the video demonstration page.

Wherein, S1230 is similar to S120 in the embodiment shown in Fig. 1, which will not be described in detail here.

S1240, when a second operation on the floating window is detected, the first tab jumping to display the second tab.

Wherein, the second operation in S1240 is similar to the second operation in S130 in the embodiment shown in Fig. 1, which will not be described in detail here.

In the embodiment of the present disclosure, after a second operation on the floating window is detected, the electronic device may create a new tab, serve the created tab as a second tab, and then jump from the first tab to the second tab for display.

S1250, displaying a target video details page in the second tab, wherein the target video details page is a video details page corresponding to a target video played in the floating window.

In the embodiment of the present disclosure, after the electronic device jumps from the first tab to the second tab for display, the target video details page corresponding to a target video played by the floating window may be opened in the second tab.

Fig. 14 shows a schematic view of still another video demonstration page provided by an embodiment of the present disclosure.

As shown in Fig. 14, a tab page 1402 of the tab 2 may be displayed on the desktop computer 1401, and a video details page 1403 may be displayed in the tab page 1402. The video details page 1403 displays a video play window and the video introduction information of the video 1.

Therefore, in the embodiment of the present disclosure, after a second operation on the floating window is detected, the electronic device may create a second tab and display the target video details page in the second tab; when the user intends to return to the video demonstration page so as to continue viewing the video list, it may be realized directly by switching the displayed tabs, so as to facilitate the user to quickly return from the target video details page to the video demonstration page.

Alternatively, in the embodiment of the present disclosure, before jumping from the first tab to display the second tab, the video interaction method may further comprise: pausing the target video played through a floating window.

Specifically, after a second operation on the floating window is detected, the electronic device may first pause the target video played through a floating window, and then create a second tab to jump from the first tab to display the second tab, and display the target video details page in the second tab.

Alternatively, after jumping from the video demonstration page to display a target video details page, the electronic device may continue to play the target video automatically according to a play progress in the floating window before jumping to display the target video details page.

In other embodiments of the present disclosure, after the target video details page is displayed in the second tab, the video interaction method may further comprise: jumping from the second tab back to display the first tab when an eighth operation on the first tab is detected, wherein a floating window remains displayed on the video demonstration page in the first tab.

In the embodiment of the present disclosure, after a target video details page is displayed, when the user intends to return to view the video demonstration page displayed in the first tab, an eighth operation on the first tab may be input to the electronic device, so that the electronic device may jump from the second tab back to display the first tab corresponding to the eighth operation, and after jumping back to the first tab, a floating window may remain displayed on the video demonstration page.

Alternatively, the eighth operation may comprise an operation to trigger jumping back to display the first tab by touch control or operating a mouse to perform an operation such as click and long press on a label pane corresponding to the first tab, a voice control operation or an expression control operation, etc., and is not limited thereto here.

In some embodiments, when the user controls the electronic device to return from the second tab to display the first tab, the target video played in the video play window may be paused, and the video in the floating window on the video demonstration page may be in a paused state.

In other embodiments, when the user controls the electronic device to return from the second tab to display the first tab, the target video played in the video play window may be paused, and the target video may continue to be played in the floating window according to a play progress when the target video in the video play window is paused.

Therefore, it is possible to improve the consistent viewing of the target video by the user, thereby further improving the user's experience.

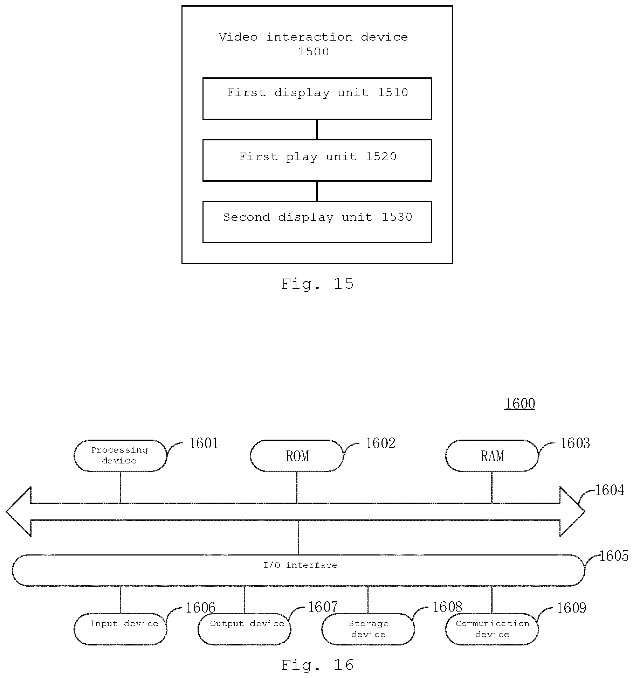

The embodiment of the present disclosure also provides a video interaction device, which will be described below in conjunction with Fig. 15.

Fig. 15 shows a schematic structural view of a video interaction device provided by an embodiment of the present disclosure.

In the embodiment of the present disclosure, the video interaction device may be an electronic device. Wherein, the electronic devices may comprise, but is not limited to, a mobile terminal such as a mobile phone, a notebook computer, a digital broadcast receiver, PDA, PAD, PMP, a vehicle-mounted terminal (for example, a vehicle-mounted navigation terminal) and a wearable device, and a fixed terminal such as digital TV, a desktop computer and a smart home device.

As shown in Fig. 15, the video interactive device 1500 may comprise a first display unit 1510, a first play unit 1520 and a second display unit 1530.

The first display unit 1510 may be configured to demonstrate a video list in a video demonstration page.

The first play unit 1520 may be configured to play a video corresponding to the first operation in the video demonstration page through a floating window when a first operation on a video list is detected.

The second display unit 1530 may be configured to jump from the video demonstration page to display a target video details page when a second operation on the floating window is detected, wherein the target video details page is a video details page corresponding to a target video played by the floating window.

In the embodiment of the present disclosure, during the process of demonstrating the video list on the video demonstration page, after a first operation on a video list is detected, a video corresponding to the first operation may be played in the video demonstration page through a floating window; and after a second operation on the floating window is detected, the video demonstration page may jump to a target video details page corresponding to a target video played in the floating window, so that the user may preview a video through the floating window, and directly enter a video details page of the video through the floating window without searching for a video of interest in the video list when it is determined that the previewed video is of interest, thereby improving the efficiency of searching for a video of interest by the user.

In some embodiments of the present disclosure, the video interactive device 1500 may further comprise a second play unit which may be configured to play, when a second operation on the video list is detected, a video corresponding to the second operation through a floating window after a video corresponding to the first operation is played through a floating window in the video demonstration page and before a second operation on the floating window is detected.

In some embodiments of the present disclosure, the video interaction device 1500 may further comprise a third play unit which may be configured to play, after the target video ends, a video next to the target video as a new target video according to a list sequence of the video list after a video corresponding to the first operation is played through a floating window in the video demonstration page and before a second operation on the floating window is detected.

In some embodiment of the present disclosure, the video list may comprise a plurality of preview windows, each of which may belong to a video.

Wherein the video interactive device 1500 may further comprise a first determining unit, a third display unit, a fourth display unit and a fifth display unit.

The first determining unit may be configured to determine a first preview window corresponding to the target video among a plurality of preview windows.

The third display unit may be configured to display a play prompt identifier on the first preview window.

The fourth display unit may be configured to display a target control when a third operation on the play prompt identifier is detected.

The fifth display unit may be configured to stop displaying the floating window and the play prompt identifier when a fourth operation on the target control is detected.

In some embodiments of the present disclosure, the video interaction device 1500 may further comprise a play control unit which may be configured to perform a play control operation corresponding to the sixth operation on the target video when a sixth operation on the floating window is detected.

Wherein, the play control operation comprises a video switching operation.

In some embodiments of the present disclosure, the video interaction device 1500 may further comprise a second determining unit and a sixth display unit.

The second determining unit may be configured to obtain a screen size of the target video.

The sixth display unit may be configured to display a floating window according to a first window size if the screen size belongs to a first size type; and display a floating window according to a second window size when the screen size belongs to a second size type.

Wherein, the first window size is different from the second window size.

In some embodiment of the present disclosure, the height value of the first window size is different from that of the second window size.

In some embodiments of the present disclosure, the video interaction device 1500 may further comprise a position adjusting unit, a third determining unit, a seventh display unit and an eighth display unit.

The position adjusting unit may be configured to adjust a display position of the floating window according to a real-time position of the seventh operation when a seventh operation on the floating window is detected.

The third determining unit may be configured to determine an ending position of the seventh operation when the seventh operation ends.

The seventh display unit may be configured to display a floating window at the ending position if the ending position is located within the target display area.

The eighth display unit may be configured to bounce the floating window from the ending position to the target position corresponding to the ending position for display in the case where the ending position is located outside the target display area, wherein the target position is located within the target display area.

In some embodiments of the present disclosure, the video interaction device 1500 may further comprise a ninth display unit which may be configured to display a video demonstration page in the first tab before the video list is demonstrated in the video demonstration page.

Wherein the second display unit 1530 may comprise a first display sub-unit and a second display sub-unit.

The first display sub-unit may be configured to jump from the first tab to display the second tab.

The second display sub-unit may be configured to display a target video details page in the second tab.

In some embodiments of the present disclosure, the video interaction device 1500 may further comprise a fourth play unit which may be configured to pause the target video played through a floating window before jumping from the first tab to display the second tab.

In some embodiments of the present disclosure, the video interaction device 1500 may further comprise a tenth display unit which may be configured to jump from the second tab back to display the first tab after a target video details page is displayed in the second tab and when an eighth operation on the first tab is detected, wherein a floating window remains displayed on the video demonstration page in the first tab.

In some embodiment of the present disclosure, the video details page may comprise a video play window and the video introduction information.

Wherein the video interactive device 1500 may further comprise a fifth play unit, a sixth play unit and a seventh play unit.

The fifth play unit may be configured to play the target video through the video play window after jumping from the video demonstration page to display a target video details page.

The sixth play unit may be configured to pause the target video played through the video play window if at least part of the video play window moves out of a page display area of the target video details page.

The seventh play unit may be configured to continue to play the target video through a floating window within the target video details page.

It is to be noted that, the video interaction device 1500 shown in Fig. 15 may perform various steps in the method embodiments shown in Figs. 1 to 14, and realize various processes and effects in the method embodiments shown in Figs. 1 to 14, which will not be described in detail here.

The embodiment of the present disclosure also provides an electronic device, which may comprise a processor and a memory, and the memory may be configured to store executable instructions. Wherein, the processor may be configured read the executable instructions from the memory and execute the executable instructions to implement the video interaction method in the above-described embodiments.

Fig. 16 shows a schematic structural view of an electronic device provided by an embodiment of the present disclosure. Specifically refer to Fig. 16 below, which shows a structural schematic view of an electronic device 1600 suitable for implementing the embodiment of the present disclosure.

The electronic device 1600 in the embodiment of the present disclosure may comprise, but is not limited to, a mobile terminal such as a mobile phone, a notebook computer, a digital broadcast receiver, PDA, PAD, PMP, a vehicle-mounted terminal (for example, a vehicle-mounted navigation terminal) and a wearable device, etc., and a fixed terminal such as a digital TV, a desktop computer and a smart home device, etc.

It is to be noted that, the electronic device 1600 shown in Fig. 16 which is only an example, shall not restrict the functions and operational scope of the embodiment of the present disclosure.

As shown in Fig. 16, the electronic device 1600 may comprise a processing device (for example, a central processing unit, a graphics processor or the like) 1601, which may perform various appropriate actions and processing according to a program stored in a read-only memory (ROM) 1602 or a program loaded from a storage device 1608 into a random access memory (RAM) 1603. In the R_AM 1603, various programs and data required for the operation of the electronic device 1600 are also stored. A processing device 1601, a ROM 1602 and a RAM 1603 are connected to each other via a bus 1604. An input/output (I/O) interface 1605 is also connected to the bus 1604.

Generally, the following devices may be connected to the I/O interface 1605: an input device 1606 comprising, for example, a touch screen, a touch pad, a keyboard, a mouse, a camera, a microphone, an accelerometer, a gyroscope, and the like; an output device 1607 comprising, for example, a liquid crystal display (LCD), a speaker, a vibrator, and the like; a storage device 1608 comprising, for example, a magnetic tape, a hard disk, and the like; and a communication device 1609. The communication device 1609 may allow the information display device 1600 to communicate wirelessly or in wire with other devices so as to exchange data. Although Fig. 16 shows an electronic device 1600 with various devices, it should be understood that there is no requirement for implementing or providing all the devices shown. More or less devices may be alternatively implemented or provided.

The embodiment of the present disclosure also provides a computer-readable storage medium having a computer program stored thereon that, when executed by a processor, causes the processor to implement the video interaction method in the above-described embodiments.

In particular, according to the embodiment of the present disclosure, the process described above with reference to the flowchart may be implemented as a computer software program. For example, the embodiment of the present disclosure comprises a computer program product comprising a computer program carried on a non-transitory computer-readable medium, which contains program codes for performing the method shown in the flowchart. In such embodiment, the computer program may be downloaded and installed from the network through the communication device 1609, or installed from the storage device 1608, or installed from the ROM 1602. When the computer program is executed by the processing device 1601, the above-described functions defined in the video interaction method of the embodiment of the present disclosure are performed.

It is to be noted that, the above-described computer-readable medium in the present disclosure may be a computer-readable signal medium or a computer-readable storage medium or any combination thereof. The computer-readable storage medium may be, for example, but is not limited to, an electrical, magnetic, optical, electromagnetic, infrared, or semiconductor system, apparatus or device, or a combination thereof. More specific examples of the computer-readable storage medium may comprise, but is not limited to, an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In this disclosure, the computer-readable storage medium may be any tangible medium containing or storing a program, which may be used by an instruction execution system, apparatus or device or in combination therewith. In this disclosure, the computer-readable signal medium may comprise a data signal propagated in a baseband or as part of a carrier wave having computer-readable program codes carried thereon. This propagated data signal may be in multiple forms, comprising but not limited to an electromagnetic signal, an optical signal or any suitable combination thereof. The computer-readable signal medium may also be any computer-readable medium except for a computer-readable storage medium, which may send, propagate or transmit a program used by an instruction execution system, apparatus or device or in combination therewith. The program code contained in the computer-readable medium may be transmitted by any suitable medium, comprising but not limited to: a wire, an optical cable, RF (radio frequency) and the like, or any suitable combination thereof.

In some embodiments, the client and the server may communicate using any currently known or future developed network protocol such as HTTP, and may be interconnected with digital data communication (for example, communication network) in any form or medium. Examples of the communication network comprise a local area network ("LAN"), a wide area network ("WAN"), extranet (for example, Internet) and an end-to-end network (for example, ad hoc end-to-end network), as well as any currently known or future developed network.

The above-described computer-readable medium may be comprised in the above-described electronic device; or present alone instead of being assembled into the electronic device.

The above-described computer-readable medium carries one or more programs that, when executed by the electronic device, cause the electronic device to implement that:

Displaying the video list in the video demonstration page; and when a first operation on a video list is detected, playing a video corresponding to the first operation in the video demonstration page through a floating window; and when a second operation on the floating window is detected, the video demonstration page jumping to display a target video details page, wherein the target video details page is a video details page corresponding to a target video played by the floating window.

In an embodiment of the present disclosure, the computer program code for performing the operations of the present disclosure may be written in one or more programming languages or a combination thereof, and the above-described programming languages comprise but are not limited to object-oriented programming languages, such as Java, Smalltalk, and C++, and also comprise conventional procedural programming languages, such as "C" language or similar programming languages. The program code may be executed entirely on the user's computer, partly on the user's computer, executed as an independent software package, partly on the user's computer and partly executed on a remote computer, or entirely executed on the remote computer or server. In the case of a remote computer, the remote computer may be connected to the user's computer through any kind of network comprising a local area network (LAN) or a wide area network (WAN), or may be connected to an external computer (for example, connected through Internet using an Internet service provider).

The flowcharts and block views in the accompanying drawings illustrate the possibly implemented architectures, functions, and operations of the system, method, and computer program product according to various embodiments of the present disclosure. In this regard, each block in the flowchart or block view may represent a module, a program segment, or a part of code, wherein the module, the program segment, or the part of code contains one or more executable instructions for realizing a specified logic function. It should also be noted that, in some alternative implementations, the functions marked in the block may also occur in a different order from the order marked in the accompanying drawings. For example, two blocks shown in succession which may actually be executed substantially in parallel, may sometimes also be executed in a reverse order, depending on the functions involved. It should also be noted that each block in the block view and/or flowchart, and a combination of the blocks in the block view and/or flowchart, may be implemented by a dedicated hardware-based system that performs the specified functions or operations, or may be implemented by a combination of dedicated hardware and computer instructions.

The units involved in the described embodiments of the present disclosure may be implemented in software or hardware. Wherein, the names of the units do not constitute a limitation on the units themselves under certain circumstances.

The functions described hereinabove may be performed at least in part by one or more hardware logic components. For example, without limitation, the hardware logic components of a demonstrative type that may be used comprise: a Field Programmable Gate Array (FPGA), an Application Specific Integrated Circuit (ASIC), an Application Specific Standard Product (ASSP), a System on Chip (SOC), a Complex Programmable Logical device (CPLD) and the like.

In the context of the present disclosure, a machine-readable medium may be a tangible medium, which may contain or store a program for use by the instruction execution system, apparatus, or device or use in combination with the instruction execution system, apparatus, or device. The machine-readable medium may be a machine-readable signal medium or a machine-readable storage medium. The machine-readable medium may comprise, but is not limited to, an electronic, magnetic, optical, electromagnetic, infrared, or semiconductor system, device or device, or any suitable combination thereof. More specific examples of the machine-readable storage medium may comprise an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

The above description is only an explanation of preferred embodiments of the present disclosure and the applied technical principles. Those skilled in the art should understand that the scope of disclosure involved in this disclosure is not limited to the technical solutions formed by the specific combination of the above technical features, and at the same time should also cover other technical solutions formed by arbitrarily combining the above-described technical features or equivalent features without departing from the above disclosed concept. For example, the above-described features and the technical features disclosed in the present disclosure (but not limited thereto) having similar functions are replaced with each other to form a technical solution.

In addition, although the operations are depicted in a specific order, this should not be understood as requiring these operations to be performed in the specific order shown or performed in a sequential order. Under certain circumstances, multitasking and parallel processing might be advantageous. Likewise, although several specific implementation details are contained in the above discussion, these should not be construed as limiting the scope of the present disclosure. Certain features that are described in the context of individual embodiments may also be implemented in combination in a single embodiment. On the contrary, various features described in the context of a single embodiment may also be implemented in multiple embodiments individually or in any suitable sub-combination.

Although the present subject matter has been described in language specific to structural features and/or methodological actions, it should be understood that the subject matter defined in the appended claims is not necessarily limited to the specific features or actions described above. On the contrary, the specific features and actions described above are only exemplary forms of implementing the claims.

## Claims

1. A video interaction method, comprising:
displaying a video list in a video demonstration page;
playing a video corresponding to a first operation in the video demonstration page through a floating window when the first operation on a video list is detected; and
jumping from the video demonstration page to display a target video details page when a second operation on the floating window is detected, wherein the target video details page is a video details page corresponding to a target video played by the floating window.

2. The method according to claim 1, wherein after a video corresponding to a first operation is played through a floating window in the video demonstration page, and before a second operation on the floating window is detected, the method further comprises:
playing a video corresponding to the second operation through the floating window when a second operation on the video list is detected.

3. The method according to claim 1, wherein after a video corresponding to a first operation is played through the floating window in the video demonstration page and before a second operation on the floating window is detected, the method further comprises:
playing a next video of the target video as a new target video according to a list sequence of the video list after the target video ends.

4. The method according to any of claims 1 to 3, wherein the video list comprises a plurality of preview windows, each of which belongs to a video;
wherein the method further comprises:
determining a first preview window corresponding to the target video among the plurality of preview windows;
displaying a play prompt identifier on the first preview window;
displaying a target control when a third operation on the play prompt identifier is detected; and
stopping displaying the floating window and the play prompt identifier when a fourth operation on the target control is detected.

5. The method according to claim 1, wherein the method further comprises:
performing a play control operation corresponding to a sixth operation on the target video when the sixth operation on the floating window is detected;
wherein the play control operation comprises a video switching operation.

6. The method according to claim 1, wherein the method further comprises:
obtaining a screen size of the target video;
displaying the floating window according to a first window size when the screen size belongs to a first size type; and
displaying the floating window according to a second window size when the screen size belongs to a second size type;
wherein the first window size is different from the second window size.

7. The method according to claim 6, wherein a height value of the first window size is different from that of the second window size.

8. The method according to claim 1, wherein the method further comprises:
adjusting a display position of the floating window according to a real-time position of a seventh operation when the seventh operation on the floating window is detected;
determining an ending position of the seventh operation when the seventh operation ends;
displaying the floating window at the ending position in a case where the ending position is located within a target display area; and
bouncing the floating window from the ending position to a target position corresponding to the ending position for display in a case where the ending position is located outside the target display area, wherein the target position is located within the target display area.

9. The method according to claim 1, wherein before the displaying a video list in the video demonstration page, the method further comprises:
displaying the video demonstration page in a first tab;
wherein the jumping from the video demonstration page to display a target video details page comprises:
jumping from the first tab to display a second tab; and
displaying the target video details page in the second tab.

10. The method according to claim 9, wherein before the jumping from the first tab to display a second tab, the method further comprises:
pausing playing the target video through the floating window.

11. The method according to claim 9, wherein after the displaying the target video details page in the second tab, the method further comprises:
jumping from the second tab back to display the first tab when an eighth operation on the first tab is detected, wherein the floating window remains displayed on the video demonstration page in the first tab.

12. The method according to claim 1, wherein the video details page comprises a video play window and video introduction information;
wherein after the jumping from the video demonstration page to display a target video details page, the method further comprises:
playing the target video through the video play window;
pausing playing the target video through the video play window in a case where at least part of the video play window moves out of a page display area of the target video details page; and
continuing to play the target video through the floating window in the target video details page.

13. A video interactive device, comprising:
a first display unit configured to demonstrate a video list in a video demonstration page;
a first play unit configured to play a video corresponding to a first operation in the video demonstration page through a floating window when the first operation on the video list is detected; and
a second display unit configured to jump from the video demonstration page to display a target video details page when a second operation on the floating window is detected, wherein the target video details page is a video details page corresponding to a target video played by the floating window.

14. An electronic device, comprising:
a processor; and
a memory for storing executable instructions;
wherein the processor is configured to read the executable instructions from the memory and execute the executable instructions to implement the video interaction method according to any of claims 1 to 12.

15. A computer-readable storage medium having a computer program stored thereon that, when executed by a processor, causes the processor to implement the video interaction method according to any of claims 1 to 12.
